# FASCICULE DE BREVET EUROPEEN

(11) **EP 2 657 542 B1**
(45) Date de publication et mention de la délivrance du brevet: **01.04.2015**
(21) Numéro de dépôt: 13165287.7
(22) Date de dépôt: 25.04.2013
(51) Int. Cl.: F16B 5/01, F16B 37/06, F16B 19/08, F16B 11/00

(54) **Procédé de fixation d'un écrou à sertir sans tête sur un panneau sandwich**
Verfahren zum Befestigen einer Nietmutter ohne Kopf auf einem Sandwichpaneel
Method for attaching a headless crimping nut to a sandwich panel

(30) Priorité: 27.04.2012 FR 1201241
(43) Date de publication de la demande: 30.10.2013
(73) Titulaire: Thales, 92200 Neuilly Sur Seine (FR)
(72) Inventeur: Legrand, Silvain, 06000 NICE (FR); Mistral, Alain, 06150 CANNES LA BOCCA (FR); Legloire, Damien, 06000 NICE (FR)
(74) Mandataire: Collet, Alain

(56) Documents cités:
- EP-A1- 1 369 599
- WO-A1-2010/072009
- BE-A- 679 840
- DE-B1- 1 475 131
- DE-C2- 2 759 438
- US-A1- 2002 050 105

## Description

L'invention se situe dans le domaine des assemblages vissés pour panneaux et, en particulier, pour des panneaux sandwichs utilisés dans les domaines aéronautique et spatial. Elle concerne un procédé de fixation d'un écrou à sertir sans tête dans un tel panneau.

Un panneau sandwich est un panneau comportant deux parois, en général parallèles, maintenues solidaires l'une de l'autre par une âme. Les parois sont relativement fines, leur épaisseur pouvant être inférieure à 1 millimètre. Elles sont par exemple en aluminium ou en carbone. L'âme du panneau sandwich peut être une mousse isolante ou une structure en nid d'abeille. En raison de cette structure, un panneau sandwich ne peut pas être taraudé. L'usinage d'un filetage intérieur n'est en effet possible ni dans la faible épaisseur des parois, ni dans une mousse ou une structure en nid d'abeille. Des assemblages par vissage restent néanmoins nécessaires pour fixer des éléments divers sur des panneaux sandwichs. Une solution consiste à utiliser des écrous à sertir, également appelés écrous-rivets ou écrous rapportés. Un écrou à sertir comprend un corps cylindrique, également appelé fût, et une tête, également appelée collerette, s'étendant radialement à une extrémité du corps. La tête forme une surface de contact annulaire avec la paroi du panneau sandwich. Un alésage s'étend axialement à l'intérieur du corps depuis la tête. L'alésage peut être borgne ou débouchant. Le corps comprend une portion dans laquelle l'alésage est taraudé, et une portion déformable.

La mise en place d'un écrou à sertir sur une paroi d'un panneau sandwich s'effectue comme suit. Dans une première étape, un trou borgne est usiné sur la paroi du panneau. Le diamètre du trou est sensiblement égal au diamètre extérieur du corps. Dans une deuxième étape, l'écrou à sertir est vissé sur la tige filetée d'un outil de sertissage et positionné dans le trou de la paroi, la collerette venant en appui sur la paroi du panneau. L'écrou est ensuite serti, l'outil de sertissage exerçant une traction sur la portion taraudée de l'écrou à sertir en direction de la collerette. L'outil de sertissage peut alors être dévissé de l'écrou à sertir. Après le sertissage, la portion déformable du corps de l'écrou forme un bourrelet venant en appui contre la surface intérieure de la paroi du panneau sandwich. L'écrou à sertir est ainsi fixé à la paroi par pincement de la paroi entre le bourrelet et la collerette de l'écrou à sertir. Dans la mesure où l'écrou à sertir est fixé à partir d'un seul côté de la paroi, il est qualifié d'aveugle.

Le document EP 1 369 599 A décrit un procédé selon le préambule de la revendication 1.

Un problème des écrous à sertir est que leur collerette fait saillie à la surface de la paroi du panneau. Cette saillie empêche la mise en contact de la surface de la paroi du panneau avec celle d'un élément devant y être fixé. Un tel contact direct peut être recherché afin de répartir la transmission d'efforts entre le panneau et l'élément qui y est fixé, ou afin d'augmenter les échanges thermiques entre les pièces. Il existe des écrous à sertir limitant l'épaisseur de la saillie, à savoir des écrous à sertir à tête fraisée et des écrous à sertir à tête auto-affleurante. Ces deux types d'écrous présentent une tête fraisée venant s'insérer dans la paroi du panneau par déformation locale lors du sertissage. Néanmoins, même les écrous à sertir à tête auto-affleurante, également appelés écrous à sertir à tête fine, ne permettent pas d'annuler complètement la saillie. Or dans certains domaines, comme le domaine spatial, les tolérances d'affleurement peuvent être de l'ordre du dixième de millimètre. En outre, la largeur annulaire de la collerette des écrous à tête fraisée et des écrous à tête auto-affleurante étant inférieure à celle des écrous à tête plate, la résistance de ces écrous à la poussée vers l'intérieur du panneau est diminuée.

Il est possible de renforcer cette résistance à la poussée en injectant de la colle à l'intérieur du panneau au niveau de l'écrou à sertir. Dans le cas d'un panneau sandwich à structure en nid d'abeille, la quantité de colle à injecter pour noyer complètement l'écrou à sertir peut difficilement être estimée. Le perçage du trou borgne peut en effet avoir mis en communication plusieurs alvéoles de la structure en nid d'abeilles. Une solution est de percer deux trous supplémentaires au voisinage de l'écrou à sertir. Un premier trou sert pour l'injection de colle, et un deuxième trou sert d'évent. De la colle est injectée par le premier trou jusqu'à ce qu'il en ressorte par le deuxième. Cette méthode présente notamment l'inconvénient de nécessiter l'usinage de trous supplémentaires. La durée de pose de l'écrou à sertir est donc augmentée. De plus, les trous fragilisent le panneau et peuvent poser des problèmes d'étanchéité. Un autre inconvénient est que le panneau doit être nettoyé de la colle ayant dégorgé du deuxième trou.

Un but de l'invention est notamment de remédier à tout ou partie des inconvénients précités en permettant la pose d'écrou à sertir sans tête tout en garantissant son maintien dans un panneau sandwich. A cet effet, l'invention a pour objet un procédé de fixation d'un écrou à sertir sans tête sur une paroi d'un panneau comprenant un trou borgne, le procédé comprenant les étapes suivantes :
▪ injecter une quantité prédéterminée de colle dans le trou borgne ;
▪ assembler l'écrou à sertir sans tête sur un outil de sertissage, l'outil de sertissage comportant une plaque d'appui percée et une vis traversant la plaque d'appui, la vis étant apte à être vissée dans l'écrou à sertir de manière à plaquer une extrémité de l'écrou à sertir sur une surface de la plaque d'appui ;
▪ positionner l'écrou à sertir sans tête dans le trou borgne, la surface de la plaque d'appui plaquée contre l'extrémité de l'écrou à sertir venant en appui sur la paroi du panneau ;
▪ sertir l'écrou à sertir de manière à pincer la paroi du panneau entre la plaque d'appui et un bourrelet formé par déformation de l'écrou à sertir.

Selon une forme particulière de réalisation, la colle est moussante, la quantité injectée étant déterminée de manière à remplir l'espace laissé libre par l'écrou à sertir dans le trou borgne après polymérisation.

Le panneau comprend par exemple une âme à structure en nid d'abeille.

Le procédé peut comporter les étapes supplémentaires suivantes à l'issue de l'étape de sertissage :
▪ polymériser la colle de manière à ce qu'elle soit suffisamment rigide pour maintenir l'écrou à sertir pressé contre la paroi du panneau ;
▪ retirer l'outil de sertissage de l'écrou à sertir une fois la colle polymérisée.

Selon une forme particulière de réalisation, l'écrou à sertir comprend un fût cylindrique et un alésage dans le fût de manière à former une portion déformable, la plaque d'appui comprenant un épaulement venant s'engager dans l'alésage lors de l'étape d'assemblage de manière à empêcher le bourrelet de se former vers l'intérieur de l'alésage.

L'invention a notamment pour avantage qu'elle permet de simplifier la pose d'écrous à sertir. Le nombre d'étapes nécessaires et le temps de pose sont diminués.

L'invention sera mieux comprise et d'autres avantages apparaîtront à la lecture de la description qui va suivre, faite en regard de dessins annexés sur lesquels :
- la figure 1 représente un exemple d'écrou à sertir sans tête utilisé dans le procédé de fixation selon l'invention ;
- la figure 2 représente un exemple d'étapes du procédé de fixation d'un écrou à sertir sur un panneau sandwich selon l'invention ;
- les figures 3A à 3E représentent un panneau sandwich à différents stades du procédé de fixation selon l'invention.

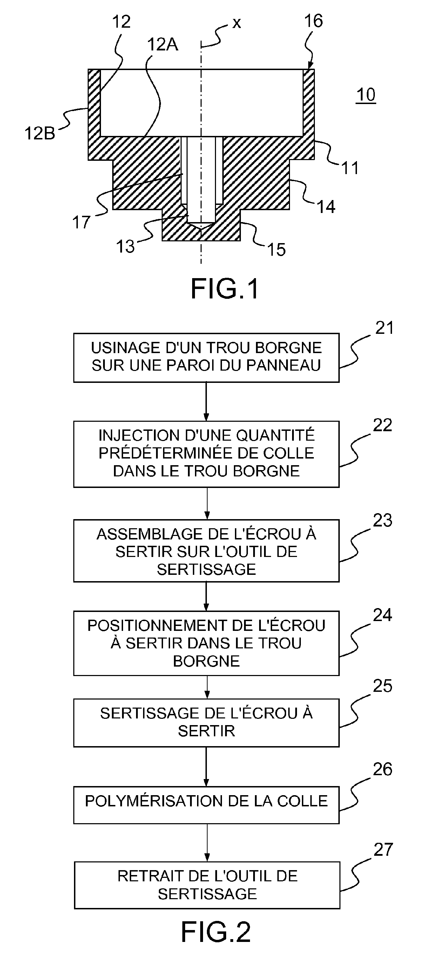

La figure 1 représente un exemple d'écrou à sertir sans tête. L'écrou à sertir 10 comprend un fût 11 cylindrique de révolution selon un axe X, un premier alésage 12 s'étendant sur une première partie longitudinale du fût 11, un deuxième alésage 13 s'étendant sur une deuxième partie longitudinale du fût 11 depuis le fond 12A du premier alésage 12, et des épaulements 14 et 15 sur des troisième et quatrième parties longitudinales, respectivement. Le diamètre du premier alésage 12 est légèrement inférieur au diamètre extérieur du fût 11. L'alésage 12 forme ainsi une portion déformable 12B pour l'écrou à sertir 10. Cette portion déformable 12B se termine à une extrémité du fût 11 par une surface annulaire 16. Le diamètre du deuxième alésage 13 est inférieur au diamètre du premier alésage 12. L'alésage 13 comporte une portion taraudée 17 s'étendant depuis le fond 12A du premier alésage 12. Selon l'invention, l'écrou à sertir est sans tête, c'est-à-dire qu'il ne comporte pas de collerette s'étendant radialement à l'une de ses extrémités. Ainsi, le diamètre extérieur maximal de l'écrou à sertir correspond au diamètre maximal du fût.

Dans l'exemple de réalisation de la figure 1, le fût présente une forme extérieure cylindrique de révolution. Le fût peut néanmoins être simplement cylindrique, par exemple carré ou hexagonal. Le fût de l'écrou à sertir peut également comporter des stries longitudinales sur sa surface extérieure, sur tout ou partie de sa hauteur.

La figure 2 représente un exemple d'étapes du procédé de fixation d'un écrou à sertir sans tête sur un panneau sandwich selon l'invention. On considère de manière générale un panneau sandwich comportant deux parois maintenues solidaires l'une de l'autre par une âme. Dans une première étape 21, un trou borgne est usiné sur l'une des parois du panneau sandwich. Dans une deuxième étape 22, une quantité prédéterminée de colle est injectée dans le trou borgne. De préférence, la colle est moussante, c'est-à-dire qu'elle se dilate en polymérisant. Ainsi, elle peut combler un volume variable, à savoir l'espace du trou borgne laissé libre par l'écrou à sertir. Dans une troisième étape 23, un écrou à sertir sans tête, par exemple l'écrou à sertir 10 décrit en référence à la figure 1, est assemblé à un outil de sertissage. L'outil de sertissage selon l'invention comprend notamment une vis et une plaque d'appui. La plaque d'appui est percée de manière à laisser traverser la vis. Son diamètre extérieur est supérieur au diamètre du trou borgne. La plaque d'appui s'apparente ainsi à une rondelle. Lors de l'étape 23, l'écrou à sertir 10 est assemblé à l'outil de sertissage par vissage de la vis dans la portion taraudée 17 de l'écrou jusqu'à ce que la plaque d'appui soit comprimée entre la tête de vis de l'outil de sertissage, et la surface annulaire 16 du fût 11. Dans une quatrième étape 24, l'écrou à sertir 10 est positionné dans le trou borgne du panneau sandwich de manière à ce que la surface de la plaque d'appui en contact avec la surface annulaire 16 du fût 11 soit également en contact avec la surface externe de la paroi sur laquelle est usiné le trou borgne. Ainsi, l'extrémité de l'écrou à sertir 10 affleure parfaitement la surface extérieure de la paroi. Dans une cinquième étape 25, l'écrou à sertir 10 est serti. Le sertissage consiste à tirer sur la portion taraudée 17 de l'écrou à sertir 10 selon son axe longitudinal X en direction de l'outil de sertissage. Cette traction est exercée par l'intermédiaire de la vis de l'outil de sertissage. Elle résulte en une déformation plastique de la portion déformable 12B en un bourrelet annulaire venant presser la surface intérieure de la paroi du panneau. Dans une sixième étape 26, la colle est polymérisée. La polymérisation de la colle permet de maintenir l'écrou à sertir par rapport au panneau sandwich en empêchant qu'il tombe dans le trou débouchant. Enfin, dans une septième étape 27, l'outil de sertissage est retiré de l'écrou à sertir en dévissant la vis.

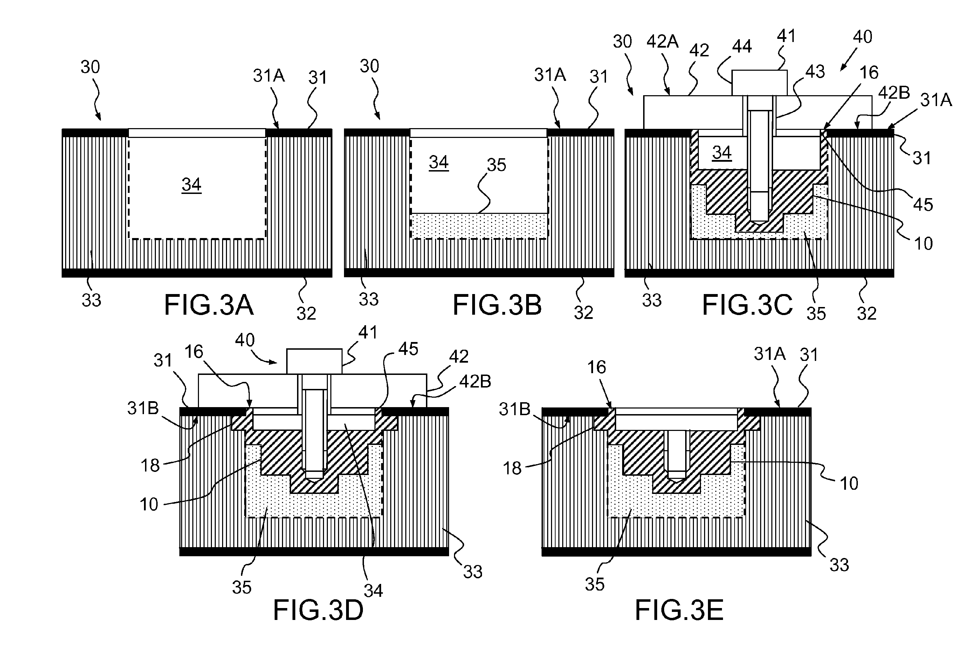

Les figures 3A à 3E représentent un panneau sandwich à différents stades du procédé de fixation d'un écrou à sertir sans tête selon l'invention. Sur ces figures, on considère un panneau sandwich 30 comportant deux parois parallèles 31 et 32 maintenues solidaires l'une de l'autre par une âme 33 à structure en nid d'abeille. Les figures 3A et 3B représentent le panneau sandwich 30 à l'issue de l'étape 21 d'usinage d'un trou borgne et à l'issue de l'étape 22 d'injection de colle, respectivement. Le trou borgne 34 est réalisé sur la paroi 31. De la colle 35 est injectée dans le trou borgne 34 à partir de son ouverture. La figure 3C représente le panneau sandwich 30 avec l'écrou à sertir 10 de la figure 1 et un outil de sertissage 40 à l'issue de l'étape 24. L'outil de sertissage 40 comporte notamment une vis 41 et une plaque d'appui 42. La plaque d'appui 42 est par exemple cylindrique circulaire. Elle comporte un alésage débouchant 43 en son centre à travers lequel passe la vis 41. La vis 41 comprend une tête 44 venant en appui sur une première surface 42A de la plaque d'appui 42. Une surface 42B de la plaque d'appui 42, opposée à la surface 42A, est en appui contre la surface annulaire 16 du fût 11. La surface 42B est simultanément en appui sur la surface extérieure 31A de la paroi 31. La figure 3D représente le panneau sandwich 30 avec l'écrou à sertir 10 à l'issue de l'étape 25 de sertissage. La traction exercée par la vis 41 engendre une déformation plastique de la portion déformable 12B en un bourrelet annulaire 18 dont une surface est pressé contre la surface intérieure 31B de la paroi 31. La paroi 31 est alors comprimée entre le bourrelet annulaire 18 et la plaque d'appui 42. Le cas échéant, des parois de la structure en nid d'abeille 33 peuvent être déformées localement par la poussée radiale du bourrelet 18. Lors de l'étape 26, la colle 35 est polymérisée. Elle permet ainsi de maintenir l'écrou à sertir 10 pressé contre la surface intérieure 31 B de la paroi 31. Si la colle est moussante et injectée en quantité suffisante, elle se dilate de manière à remplir tout l'espace creux entourant l'écrou à sertir 10. Une fois la colle polymérisée, l'outil de sertissage 40 est retirée de l'écrou à sertir 10 par dévissage de la vis 41. L'extrémité de l'écrou à sertir 10, en l'occurrence la surface annulaire 16, effleure ainsi parfaitement la surface extérieure 31 A de la paroi 31.

Selon une forme particulière de réalisation, représentée sur les figures 3C et 3D, la plaque d'appui 42 de l'outil de sertissage 40 comprend un épaulement 45 venant s'engager dans l'alésage 12 de l'écrou à sertir 10. Cet épaulement 45 permet d'une part de centrer la plaque d'appui 42 par rapport au trou borgne 34 et, d'autre part, d'empêcher la portion déformable 12B de former un bourrelet vers l'intérieur de l'alésage 12.

## Revendications

1. Procédé de fixation d'un écrou à sertir sans tête sur une paroi (31) d'un panneau (30) comprenant un trou borgne (34), le procédé comprenant les étapes suivantes :
▪ injecter (22) une quantité prédéterminée de colle (35) dans le trou borgne (34) ;
**caractérisé par** les étapes suivante :
assembler (23) l'écrou à sertir sans tête (10) sur un outil de sertissage (40), l'outil de sertissage (40) comportant une plaque d'appui (42) percée et une vis (41) traversant la plaque d'appui (42), la vis (41) étant apte à être vissée dans l'écrou à sertir (10) de manière à plaquer une extrémité (16) de l'écrou à sertir (10) sur une surface (42B) de la plaque d'appui (42) ;
▪ positionner (24) l'écrou à sertir sans tête (10) dans le trou borgne (34), la surface (42B) de la plaque d'appui (42) plaquée contre l'extrémité (16) de l'écrou à sertir (10) venant en appui sur la paroi (31) du panneau (30) ;
▪ sertir (25) l'écrou à sertir (10) de manière à pincer la paroi (31) du panneau (30) entre la plaque d'appui (42) et un bourrelet (18) formé par déformation de l'écrou à sertir (10).

2. Procédé selon la revendication 1, dans lequel la colle (35) est moussante, la quantité injectée étant déterminée de manière à remplir l'espace laissé libre par l'écrou à sertir (10) dans le trou borgne (34) après polymérisation.

3. Procédé selon l'une des revendications 1 et 2, dans lequel le panneau (30) comprend une âme (33) à structure en nid d'abeille.

4. Procédé selon l'une des revendications précédentes, comportant les étapes supplémentaires suivantes à l'issue de l'étape (25) de sertissage :
▪ polymériser (26) la colle de manière à ce qu'elle soit suffisamment rigide pour maintenir l'écrou à sertir (10) pressé contre la paroi (31) du panneau (30) ;
▪ retirer (27) l'outil de sertissage (40) de l'écrou à sertir (10) une fois la colle polymérisée.

5. Procédé selon l'une des revendications précédentes, dans lequel l'écrou à sertir (10) comprend un fût (11) cylindrique et un alésage (12) dans le fût (11) de manière à former une portion déformable (12B), la plaque d'appui (42) comprenant un épaulement (45) venant s'engager dans l'alésage (12) lors de l'étape (23) d'assemblage de manière à empêcher le bourrelet (18) de se former vers l'intérieur de l'alésage (12).

## Patentansprüche

1. Verfahren zum Befestigen einer Nietmutter ohne Kopf an einer Wand (31) eines Paneels (30) mit einem Sackloch (34), wobei das Verfahren die folgenden Schritte beinhaltet:
• Injizieren (22) einer vorbestimmten Klebstoffmenge (35) in das Sackloch (34);
gekennzeichnet durch die folgenden Schritte:
• Montieren (23) der Nietmutter ohne Kopf (10) auf einem Crimpwerkzeug (40), wobei das Crimpwerkzeug (40) eine durchbohrte Auflageplatte (42) und eine die Auflageplatte (42) durchdringende Schraube (41) umfasst, wobei die Schraube (41) in die Nietmutter (10) geschraubt werden kann, um ein Ende (16) der Nietmutter (10) auf eine Oberfläche (42B) der Auflageplatte (42) zu plattieren;
• Positionieren (24) der kopflosen Nietmutter (10) in dem Sackloch (34), wobei die Oberfläche (42B) der gegen das Ende (16) der Nietmutter (10) plattierten Auflageplatte (42) an der Wand (31) des Paneels (30) zur Anlage kommt;
• Crimpen (25) der Nietmutter (10), um die Wand (31) des Paneels (30) zwischen der Auflageplatte (42) und einem durch Verformung der Nietmutter (10) gebildeten Wulst (18) einzuklemmen.

2. Verfahren nach Anspruch 1, wobei der Klebstoff (35) schäumend ist, wobei die injizierte Menge so bestimmt wird, dass der durch die Nietmutter (10) in dem Sackloch (34) nach der Polymerisation freigelassene Raum ausgefüllt wird.

3. Verfahren nach einem der Ansprüche 1 und 2, wobei das Paneel (30) einen Kern (33) mit einer Honigwabenstruktur umfasst.

4. Verfahren nach einem der vorherigen Ansprüche, das die folgenden ergänzenden Schritte nach dem Crimpschritt (25) beinhaltet:
• Polymerisieren (26) des Klebstoffs so, dass er starr genug ist, um die Nietmutter (10) gegen die Wand (31) des Paneels (30) gepresst zu halten;
• Zurückziehen (27) des Crimpwerkzeugs (40) von der Nietmutter (10) nach dem Polymerisieren des Klebstoffs.

5. Verfahren nach einem der vorherigen Ansprüche, wobei die Nietmutter (10) einen zylindrischen Schaft (11) und eine Bohrung (12) in dem Schaft (11) aufweist, um einen verformbaren Abschnitt (12B) zu bilden, wobei die Auflageplatte (42) eine Schulter (45) aufweist, die in dem Montageschritt (23) in die Bohrung (12) eingreift, um zu verhindern, dass sich der Wulst (18) zum Inneren der Bohrung (12) hin bildet.

## Claims

1. Method for fixing a headless crimping nut to a wall (31) of a panel (30) comprising a blind hole (34), the method comprising the following steps:
• injecting (22) a predetermined quantity of adhesive (35) into the blind hole (34);
**characterised by** the following steps:
• assembling (23) the headless crimping nut (10) on a crimping tool (40), the crimping tool (40) comprising a perforated pressing plate (42) and a screw (41) which extends through the pressing plate (42), the screw (41) being capable of being screwed into the crimping nut (10) so as to press an end (16) of the crimping nut (10) on a surface (42B) of the pressing plate (42);
• positioning (24) the headless crimping nut (10) in the blind hole (34), the surface (42B) of the pressing plate (42) which is pressed against the end (16) of the crimping nut (10) moving into abutment against the wall (31) of the panel (30);
• crimping (25) the crimping nut (10) so as to grip the wall (31) of the panel (30) between the pressing plate (42) and a flange (18) which is formed by deformation of the crimping nut (10).

2. Method according to claim 1, wherein the adhesive (35) is a foaming adhesive, the injected quantity being determined so as to fill the space which is left free by the crimping nut (10) in the blind hole (34) after polymerisation.

3. Method according to one of claims 1 and claim 2, wherein the panel (30) comprises a core (33) having a honeycomb structure.

4. Method according to any one of the preceding claims, comprising the following additional steps after the step (25) of crimping:
• polymerising (26) the adhesive so that it is sufficiently rigid to maintain the crimping nut (10) in a state pressed against the wall (31) of the panel (30);
• withdrawing (27) the crimping tool (40) from the crimping nut (10) once the adhesive has been polymerised.

5. Method according to any one of the preceding claims, wherein the crimping nut (10) comprises a cylindrical shaft (11) and a hole (12) in the shaft (11) so as to form a deformable portion (12B), the pressing plate (42) comprising a shoulder (45) which moves into engagement in the hole (12) during the assembly step (23) so as to prevent the flange (18) from forming towards the inner side of the hole (12).
